(19) Europäisches Patentamt / European Patent Office / Office européen des brevets

(11) **EP 1 978 487 A2**

(12) **EUROPEAN PATENT APPLICATION**

(43) Date of publication:
**08.10.2008 Bulletin 2008/41**

(51) Int Cl.:
**G06T 17/20** (2006.01)

(21) Application number: **08006827.3**

(22) Date of filing: **03.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **06.04.2007 JP 2007100913**

(71) Applicant: **Hitachi, Ltd.**
**Chiyoda-ku**
**Tokyo 100-8280 (JP)**

(72) Inventors:
• **Yokohari, Takashi**
**Tokyo 100-8220 (JP)**
• **Nishigaki, Ichiro**
**Tokyo 100-8220 (JP)**

(74) Representative: **Beetz & Partner**
**Patentanwälte**
**Steinsdorfstrasse 10**
**80538 München (DE)**

(54) **Numerical analysis mesh generating method and apparatus**

(57) The triangular mesh generating portion (104) divides the surface of geometry model to be meshed in a meshed manner according to a target element dimension and generates a triangular mesh on the surface of geometry model. The regular mesh generating portion (105) assumes a shaped parallelepiped enclosing the shape to be meshed. The parallelepiped is divided in a meshed manner by the hexahedral element whose distance between the nodes has the substantially same density as the triangular mesh on the surface. The resulting regular mesh located inside the triangular mesh on the surface of geometry model is divided into a tetrahedral meshed manner. The shell meshing area extracting portion (106) extracts a shell-like space between the inner tetrahedral mesh and the triangular mesh on the surface of geometry model. The shell mesh generating portion (107) generates the tetrahedral mesh in the overall shape to be meshed.

FIG.1

EP 1 978 487 A2

**Description**

BACKGROUND OF THE INVENTION

Field of the Invention

The present invention pertains to a technology of CAE (Computer Aided Engineering) which aides in designing and developing a product through the use of a computer, and more particularly to an apparatus and a method for generating a numerical analysis mesh which are arranged to quickly generate the numerical analysis mesh.

Description of the Related Art

As an analysis simulation computer environment including such as a super computer or a PC (Personal Computer) cluster is becoming highly enhanced, analysis of an overall product and multi-physical analysis are being expected more and more. These sorts of analyses essentially need to generate tens to hundreds of millions of analysis meshes. Hence, the current purpose of this technology is the way of reducing a time taken in generating a large-scaled mesh.

As a method of automatically generating a three-dimensional numerical analysis mesh, there have well known the Delaunay method, the Advancing Front Method and the Oct-tree Type Method. (Refer to ISBN:9781903398005 "Mesh Generation".) Turning to the Delaunay method, at the first step, this method is executed to generate a parallelpiped enclosing an object to be analyzed and then to divide the parallelpiped by diagonals into five tetrahedrons.

Throughout the specification, in principle, the term "mesh" means the overall mesh pattern.

The method is further executed to generate nodes on the surface and inside of the tetrahedron and to select one of the nodes. Then, the Voronoi polygon having the selected node is created and the mesh of the Voronoi polygon is divided again. Likewise, one node is selected from each of the re-divided meshes, and the re-division is repeated. Lastly, a first dummy point is deleted.

Turning to the Advancing Front Type Method, this method is executed to sequentially generate elements by connecting the nodes separated from the base plane by an element dimension so as not to bring about interference with the generated element. Turning to the Oct-tree Type Method, this method is executed to divide a hexahedron enclosing an area into 8 hexahedrons. Each of the divided hexahedrons is divided into 8 hexahedrons. After that, only the hexahedrons with a boundary are repetitively re-divided.

The Voxel mesh, which is generated by dividing an object in a diced manner, is used for the analysis program dedicated thereto. Further, in order to remove a minute edge or plane appearing closer to the surface of geometry model in the Voxel mesh or the orthogonal mesh used in the Oct-tree Type Method, there has been proposed the method of moving the adjacent inner node to the surface of geometry model. (Refer to JP-A-7-334541.)

However, the foregoing conventional methods provide a capability of generating a large-scaled mesh but need a considerably long time in generating such a mesh. Those methods thus have difficulty in generating a large-scaled numerical analysis mesh.

Further, As in the technology disclosed in JP-A-7-334541, the generation of the Voxel mesh needs only a short time. The Voxel mesh also has difficulties of rugged surface and limited range of analysis.

Further, in the Voxel mesh or the orthogonal mesh used in the Oct-tree Type Method, there has been proposed the method of making the rugged surface smooth and moving the node along the boundary of geometry model. This method, however, may make the mesh near the surface of geometry model irregular.

SUMMARY OF THE INVENTION

It is therefore an object of the present invention to provide a method and an apparatus for generating a numerical analysis mesh which are capable of generating an excellent large-scaled mesh at fast speed.

In carrying out the object, according to an aspect of the invention, a numerical analysis mesh generating apparatus according to the invention is applied to generation of a numerical analysis mesh of a three-dimensional geometry model of an object to be analyzed as a preprocessing stage for analyzing the object through the use of a computer.

That is, a tetrahedral mesh with a regular structure is located in a first portion inside the three-dimensional geometry model of an object to be analyzed, except the portion closer to the surface of the model, through the use of a computer. In the second portion laid between the surface of the tetrahedral mesh with a regular structure and the surface of the three-dimensional geometry model, rather than the first portion, the tetrahedral mesh is sequentially generated also through the use of a computer.

According to the invention, the process is executed to locate a Voxel tetrahedral regular mesh inside a geometry model of an object to be analyzed and sequentially generate a mesh for a gap appearing between the surface of geometry model and the regular mesh. This process makes it possible to generate a large-scaled mesh at fast speed.

In the concrete process, at first, the surface of an object to be meshed is divided in a mesh pattern according to a target element dimension. As a result, a triangular mesh on the surface of geometry model is generated. Then, assuming that there exists a shaped parallelpiped enclosing the shape of the object to be meshed, the parallelpiped is divided in a mesh pattern by hexahedral elements in which the adjacent nodes are placed at the substantially same density as those of the surface triangular mesh. The resulting mesh is a regular mesh.

Then, the regular mesh located inside the triangular mesh on the surface of geometry model is divided in a tetrahedral mesh pattern. Further, by filling up the shell-like space between the inner tetrahedral mesh and the triangular mesh on the surface of geometry model with the tetrahedral mesh, the tetrahedral mesh is generated in the overall object to be meshed.

The mesh to be located inside the geometry model is not necessarily the regular mesh. That is, instead of the regular mesh, it is possible to fit the pre-created tetrahedral mesh in the triangular mesh on the surface of geometry model and then to use the result as the inner mesh. Moreover, by locating a space with a half of a target element dimension as a minimum between the boundary of geometry model and the inner mesh, it is possible to generate an excellent mesh in the portion closer to the surface.

According to the invention, since the mesh is sequentially generated, what is to be meshed is only the shell-like gap portion, so that the area to be meshed becomes quite small. This leads to noticeably reducing the meshing time. Concretely, it is grasped that the meshing time is reduced into one-fifth or less in some models.

Further, about the regular mesh portion, the data about only the surface of the mesh portion is stored in a memory. Hence, the memory capacity required when generating a mesh is made smaller.

Other objects, features and advantages of the invention will become apparent from the following description of the embodiments of the invention taken in conjunction with the accompanying drawings.

BRIEF DESCRIPTION OF THE DRAWINGS

Fig. 1 is a model view showing an exemplary arrangement of a large-scaled numerical analysis mesh generating apparatus according to an embodiment of the present invention;
Fig. 2 is a flowchart showing a processing flow of a program to be executed in the mesh generating apparatus;
Fig. 3 is a view showing an exemplary geometry model in which a mesh is to be generated;
Fig. 4 is a view showing a triangular mesh on the surface covered with a regular mesh;
Fig. 5 is a view showing the result in which the regular mesh is determined to be located inside or outside the shape;
Fig. 6 is a view showing a regular mesh generated in the shape;
Fig. 7 is a view showing an extracted shell meshing area;
Fig. 8 is a view showing the way of dividing the shell meshing area in a meshed manner;
Fig. 9 is a view showing an exemplary mesh generated in the shell;
Fig. 10 is a view showing an exemplary mesh completed by melting the shell mesh with the regular mesh;
Fig. 11A is a view showing a geometry model in which an exemplary mesh is to be generated in a three-dimensional shape;
Fig. 11B is a view showing a geometry model in which the mesh is generated; and
Fig. 11C is a view showing a geometry model in which the mesh is not partially displayed.

DESCRIPTION OF THE INVENTION

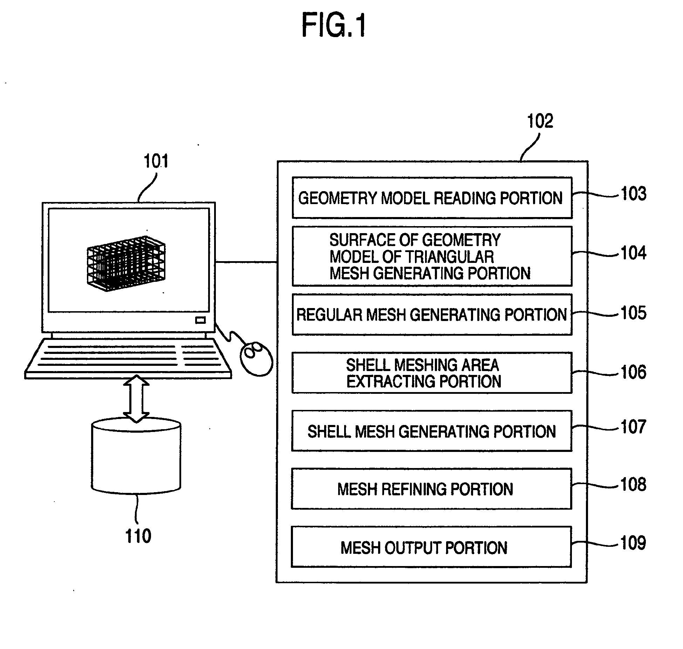

Hereafter, one embodiment of the present invention will be described with reference to Figs. 1 to 11.

Fig. 1 is a model diagram showing an exemplary arrangement of a large-scaled numerical analysis mesh generating apparatus according to the embodiment of the invention.

As shown in Fig. 1, the large-scaled numerical analysis mesh analyzing apparatus is arranged to have a computer 101 and a large-scaled numerical analysis mesh generating program 102. The computer 101 is arranged to have a CPU, a storage unit, an I/O unit including a keyboard and a display, an external storage unit 110, and so forth.

Further, the large-scaled numerical analysis mesh generating program 102 is configured of a geometry model reading portion 103, a surface of geometry model triangular mesh generating portion 104, a regular mesh generating portion 105, a shell meshing area extracting portion 106, a shell mesh generating portion 107, a mesh refining portion 108, and a mesh output portion 109.

The geometry model reading portion 103 performs the process of reading a geometry model of an object to be analyzed, the model being created by a three-dimensional CAD (Computer Aided Design) technology or the like. The surface of geometry model triangular mesh generating portion 104 performs the process of dividing the surface of the geometry model of the object to be analyzed in a triangular meshed manner as a pre-stage of generating tetrahedral analysis meshes.

The regular mesh generating portion 105 performs the process of locating a regularly structured tetrahedral mesh pattern inside the triangular mesh pattern on the surface of geometry model. The shell meshing area extracting portion 106 performs the process of retrieving and picking up the triangle on the surface of the regular mesh and then extracting a space laid between the triangle on the regularly meshed surface and the triangular mesh on the surface of geometry model. The space extracted by the portion 106 is called the "shell" in this embodiment.

The shell mesh generating portion 107 performs the process of generating the tetrahedral mesh in the shell by means of the known tetrahedral mesh generating method (such as the Delaunay Method or the Advancing Front Method). The mesh refining portion 108 performs the process of modifying the mesh that is not fitted for analysis if any. The mesh output portion 19 performs the process of outputting the completed analysis mesh to the external storage unit. Hereafter, the process from the generation of the triangular mesh on the surface of geometry model to the generation of the shell mesh will be discussed in more detail.

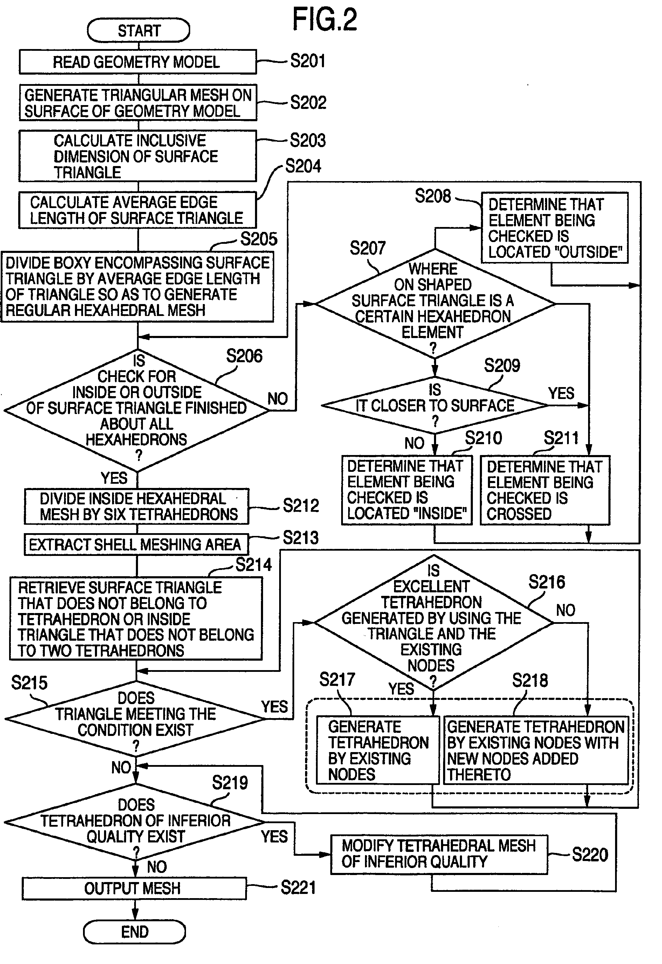

Fig. 2 is a flowchart illustrating the contents of process according to this embodiment of the large-scaled numerical analysis mesh generating program shown by 102 in Fig. 1. In a step S201, the geometry model is read. That is, the geometry model about which the analysis meshes are generated is pre-created by means of the three-dimensional CAD technology or the like and is used as the input data. In a step S202, the surface of the object to be meshed is divided into a meshed manner by a triangular element following a target element dimension by using the computer 101. As a result, the triangular meshes on the surface of geometry model are generated.

In order to generate the tetrahedral mesh, the surface of the geometry model is divided by the triangular mesh. The method of generating the tetrahedral mesh may be the Delaunay Method or the Advancing Front Method like the generation of the tetrahedral mesh. The term "target element dimension" means an average distance (edge length of an element) between nodes in generating a mesh and is an important factor to affecting a mesh scale, that is, an analysis time and analysis accuracy.

In a step S205, a parallelpiped enclosing a shaped to be meshed is divided in a meshed manner so that the edge length of the hexahedral element is made equal to the edge length of the surface triangular element by using the computer 101. This meshing division results in generating a regular mesh. In preparation of this process, at first, in a step S203, a minimum hexahedron enclosing the triangular mesh of the surface of geometry model is assumed.

To assume the minimum hexahedron, the process is executed to check a minimal value Xmin and a maximum value Xmax of the X coordinate of the triangular mesh on the surface of geometry model, a minimal value Ymin and a maximum value Ymax of the Y coordinate thereof, and a minimal value Zmin and a maximum value of Zmax of the Z coordinate thereof. In light of these coordinate values, the eight vertexes of the hexahedron are defined below as indicated in the expression 1

**[Expression 1]**

vertex 1: (Xmin, Ymin, Zmin)

vertex 2: (Xmax, Ymin, Zmin)

vertex 3: (Xmax, Ymax, Zmin)

vertex 4: (Xmin, Ymax, Zmin)

vertex 5: (Xmin, Ymin, Zmax)

vertex 6: (Xmax, Ymin, Zmax)

vertex 7: (Xmax, Ymax, Zmax)

vertex 8: (Xmin, Ymax, Zmax)

Then, in a step S204, the process is executed to derive an average value of edge lengths of the triangular mesh on the surface, divide the lengthwise, the crosswise, and the height lengths of the hexahedron by the average value so as to define the number of divisions (rounded to the nearest whole number). The hexahedron is divided by this number of divisions so as to generate the regular mesh composed of the hexahedron elements.

In a step S212, the process is executed to divide the hexahedral regular mesh located inside the triangle on the surface of geometry model into the tetrahedral mesh. To execute this process, in a step S206, it is determined if the check for the inside and the outside of the surface triangle is finished with respect to all hexahedrons. If the check for the inside and the outside of the surface triangle is not finished with respect to all hexahedrons in the step S206, the process goes to a step S207.

Then, in a step S207, it is determined where on the triangle on the surface of geometry model a certain hexahedron element is located. That is, it is determined if the regular mesh is located inside or outside the triangular mesh on the surface of geometry model or crossed with the triangular mesh thereon through the effect of the computer 101.

The triangular mesh on the surface of geometry model is a closed space. Hence, if all eight nodes of the hexahedron elements are located inside the closed space, it is determined that the regular mesh is located "inside" the triangular mesh on the surface of geometry model. Conversely, if none of the eight nodes of the hexahedron elements are located inside the triangular mesh on the surface, it is determined that the regular mesh is located "outside" the triangular mesh.

If in the step S207 it is determined that the hexahedron element is located "inside", going to a step S209, it is determined if the hexahedron element is located closer to the surface. On the other hand, if in the step S207 it is located "outside", going to a step S208, it is determined that the hexahedron element being checked is located "outside".

If in the step S209 it is determined that the hexahedron element is located closer to the surface, going to a steep S211, it is determined that the hexahedron element being checked is "crossed". That is, if any of the eight nodes is located inside or on the triangular surface and the other nodes are located outside, it is determined that the hexahedron element is "crossed". However, if in the step S209 it is determined that the hexahedron element is not located closer to the surface, going to a step S210, it is determined that the hexahedron element being checked is located "outside".

As such, if the nodes of the hexahedron element are located far closer to the surface triangle in consideration of the quality of the mesh, the flat tetrahedron is inevitably generated. To determine that the hexahedron element is located "inside" in that case, therefore, it is necessary to preset a threshold value. For example, if the hexahedron element is located inner from the surface triangle by a half of a target element dimension, it is determined that the hexahedron element is located "inside". This allows no inadequate narrow portion to appear between the surface triangle and the inside mesh, which leads to eliminating the factor of lowering the mesh quality.

After the element is determined "outside" in the step S208, "inside" in the step S210 or crossed in the step S211, the process goes back to the step S206.

Herein, the process of determining if the element is located "inside" will be described in more detail.

In order to determine if a certain node is located inside or outside the triangular mesh on the surface of geometry model, the following method is selected. In this method, at first, a semi-infinite straight line is assumed. This line has any of the eight nodes composing the hexahedron element as an initial point.

If the times of crossing this semi-infinite straight line with the surface triangular mesh is odd, it is determined that the target node is located inside the surface triangular mesh. On the other hand, if the times of crossing are 0 or even, it is determined that the target node is located outside the surface triangular mesh.

The remaining seven nodes are checked similarly. If it is determined that all nodes are located inside, it means that the hexahedron element is located inside the surface triangular mesh. Herein, the regular mesh provisionally determined to be located inside is further subject to the following determination.

At first, letting the three nodes composing a certain triangle be P1, P2 and P3, the coordinates of those nodes are assumed below as indicated in the expression 2.

[Expression 2]

P1: (X1, Y1, Z1)

P2: (X2, Y2, Z2)

P3: (X3, Y3, Z3)

The eight vertexes of a three-dimensional box enclosing this triangle are let to be S1, S2, S3, S4, S5, S6, S7, and S8 respectively. The coordinates of those vertexes are indicated in the expression 3.

[Expression 3]

$$S1: (TXmin, TYmin, TZmin)$$

$$S2: (TXmax, TYmin, TZmin)$$

$$S3: (TXmax, TYmax, TZmin)$$

$$S4: (TXmin, TYmax, TZmin)$$

$$S5: (TXmin, TYmin, TZmax)$$

$$S6: (TXmax, TYmin, TZmax)$$

$$S7: (TXmax, TYmax, TZmax)$$

$$S8: (TXmin, TYmax, TZmax)$$

where

$$TXmin=Min (X1, X2, X3)$$

$$TXmax=Max (X1, X2, X3)$$

$$TYmin=Min (Y1, Y2, Y3)$$

$$TYmax=Max (Y1, Y2, Y3)$$

$$TZmin=Min (Z1, Z2, Z3)$$

$$TXmax=Max (Z1, Z2, Z3)$$

Then, for example, if the element is located inner from the surface triangle by a half of a target element dimension or more, it is determined that the element is located "inside". For this purpose, a new box is assumed on the three-dimensional box enclosing the foregoing triangle. Concretely, the new box is composed of eight nodes VI to V8 indicated in the following expression 4, those eight nodes being larger that those of the three-dimensional box in the X-, the Y-, and the Z-directions by the target element dimension.

If even one of the eight nodes composing the regular mesh is located inside the new box, the regular mesh is determined to be "crossed". Herein, the target element dimension is set as TS.

[Expression 4]

$$V1: (TXmin-TS/2, TYmin-TS/2, TZmin-TS/2)$$

$$V2: (TXmax+TS/2, TYmin-TS/2, TZmin-TS/2)$$

$$V3: (TXmax+TS/2, TYmax+TS/2, TZmin-TS/2)$$

$$V4: (TXmin-TS/2, TYmax+TS/2, TZmin-TS/2)$$

$$V5: (TXmin-TS/2, TYmin-TS/2, TZmax+TS/2)$$

$$V6: (TXmax+TS/2, TYmin-TS/2, TZmax+TS/2)$$

$$V7: (TXmax+TS/2, TYmax+TS/2, TZmax+TS/2)$$

$$V8: (TXmin-TS/2, TYmax+TS/2, TZmax+TS/2)$$

The node having been determined to be located inside or crossed ordinarily belongs to a plurality of regular meshes. Hence, the node having been determined even once is put in an internal memory of the computer 101. This storage makes it possible to eliminate the duplicate calculation about the regular meshes containing the nodes stored in this memory, thereby being able to enhance the calculating efficiency.

Further, the regular mesh generated in this process may be used for enhancing the speed of retrieving the node or the element in the later process of sequentially generating a tetrahedral mesh in the steps S213 to S220. For example, when a node located closer to a certain coordinate is retrieved, conventionally, it has been necessary to calculate the distance between that node and all the other nodes.

However, the use of the regular mesh containing the nodes stored in the memory makes the hexahedron element enclosing the coordinates of the nodes apparent. Accordingly, the other hexahedron elements adjacent to the hexahedron elements are also made apparent. This thus makes it possible to promptly define the nodes to be retrieved and thereby to speed up the calculations.

In the step S212, the hexahedral mesh is divided into six tetrahedrons. That is, in the determining step S207, the hexahedral regular mesh determined to be located inside the triangular mesh on the surface of geometry model is divided into a tetrahedral meshed manner through the effect of the computer 101. This makes it possible to generate the inside tetrahedral mesh with a regular structure.

This embodiment is characterized in that the tetrahedral mesh is generated. For this purpose, finally, it is necessary to divide the hexahedral regular mesh into a tetrahedral meshed manner. To generate the shell mesh, it is necessary to generate a triangular mesh on the surface of the regular mesh. Hence, the hexahedral regular mesh is divided into tetrahedrons.

In order to efficiently use the memory for this process, the following method may be selected. That is, the method is executed to divide the tetrahedrons on the surface of the hexahedral regular mesh in a triangular meshed manner and then to divide the triangular mesh on the surface into tetrahedrons.

In the step S213, the process is executed to extract a shell meshing area. That is, a shall-like space between the inside tetrahedral mesh and the triangular mesh on the surface of geometry model is extracted by the shell-like meshing area extracting portion 106. The space laid between the surface triangles of the regular mesh and the triangular mesh of the surface of geometry model is defined as a shell meshing area.

In the step S214, the process is executed to retrieve the surface triangles that do not belong to the tetrahedron or the inside triangles that do not belong to the two tetrahedrons. That is, in the shell meshing area, the inside triangles that can be used for generating the tetrahedron are retrieved.

In the step S215, it is determined if there exists a triangle that meets the retrieval condition of the step S214. If it is determined that the triangle exists in the step S215, the process goes to the determining step S216.

In the step S216, it is determined if an excellent tetrahedron can be generated by using the triangle retrieved in the step S215 and the existing nodes. If yes in the determining step S216, the process goes to the step S217. Then, in this step, such an excellent tetrahedron is generated by using the existing nodes.

If no in the determining step S216, the process goes to the step S218. In this step, such an excellent tetrahedron is generated by the above materials and a further node added thereto.

As described above, the process of the steps S217 and S218 concerns with the process of generating a tetrahedral mesh in the shell through the effect of the shell mesh generating portion 107. To generate the tetrahedral mesh, it is possible to use the known Delaunay Method or the known Advancing Front Method.

The Delaunay Method uses the Voronoi diagram in which the space is divided according to the area influenced by the node. By connecting a node belonging to one Voronoi polygon with another node belonging to the adjacent Voronoi polygon, one edge of a tetrahedron is created. Turning to the Advancing Front Method, as the nodes are sequentially generated from the boundary to the inside, the tetrahedron element is being generated. These mesh generating methods are not described in more detail.

In the step S217, the tetrahedron is generated by using the existing nodes. In the step S218, the tetrahedron is generated by the existing nodes and the additional node(s). Then, the process goes back to the determining step S215.

In the step S219, it is determined if there exists a tetrahedron of inferior quality. If yes in this determining step S219, going to the step S220, the tetrahedron mesh of inferior quality is modified.

That is, in the step S220, the refining of the mesh is carried out. In this step, the quality of the generated tetrahedron mesh is estimated in light of the quality indexes of the mesh such as a stretch and an aspect ratio. If there exists a mesh of inferior quality that is not fitted to the analysis, the mesh is improved. The method of calculating the stretch and the aspect ratio will be discussed later.

In order to improve the mesh of inferior quality, for example, it is possible to use the method of smoothing the distance between the nodes or selecting a group of elements having flat elements, recombining the connection of the nodes and removing the flat elements.

After the tetrahedral mesh of inferior quality is modified in the step S220, the process goes back to the determining step S219.

Lastly, in a step S221, the generated mesh is outputted and then the overall process is terminated.

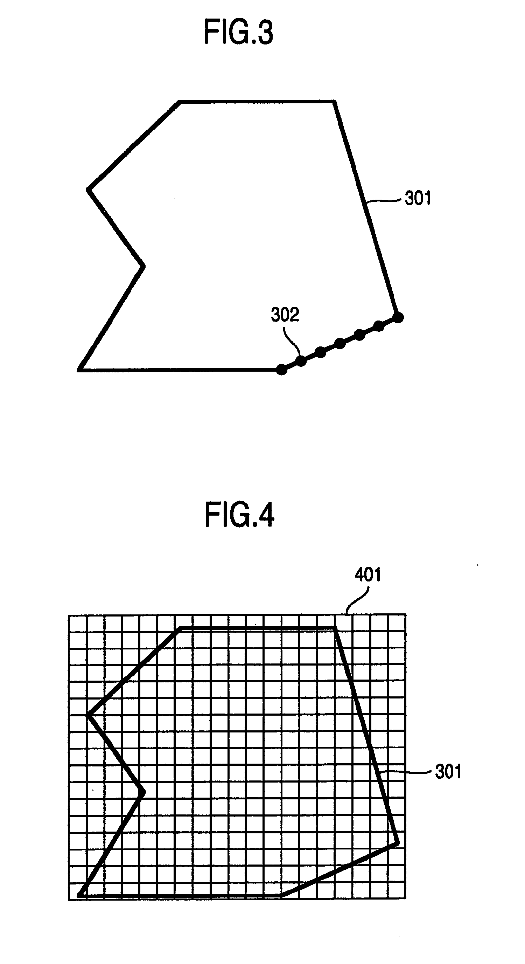

Hereafter, the process shown in Fig. 2 will be diagrammatized by using a simply geometry model. The geometry models and meshes of Figs. 3 to 10 are illustrated as two-dimensional flat polygons. In actual, they are three-dimensional cubic polygons.

Fig. 3 illustrates one example of a geometry model in which a mesh is to be generated. The present embodiment concerns with the three-dimensional geometry model. However, if the three-dimensional model is shown in a diagram, the model is too much complicated on the paper. Moreover, this embodiment may apply the basic process to not only the three-dimensional model but also the two-dimensional model.

For the convenience's sake, therefore, the two-dimensional model is shown in the figures. In Fig. 3, a numeral 301 denotes a boundary of a geometry model. A numeral 302 denotes a divisional part of the mesh. From a viewpoint of a three-dimensional model, the mesh divisional part 302 corresponds to the generation of the triangular mesh on the surface in the step S202 of Fig. 2.

Fig. 4 shows the surface triangular mesh covered with the regular mesh.

Concretely, the geometry model divided into the triangular mesh on the surface is covered with the regular mesh shown by 401 in Fig. 4. As shown in the step S204 of Fig. 2, the interval between the lattices of the regular mesh corresponds to an average value of the edge lengths of the surface triangle.

Herein, in order to execute the process of generating the surface triangles and the process of generating the tetrahedrons independently, the average value is used for an edge length of the surface triangle. Instead, it is possible to use a target element dimension value used in generating the surface triangles.

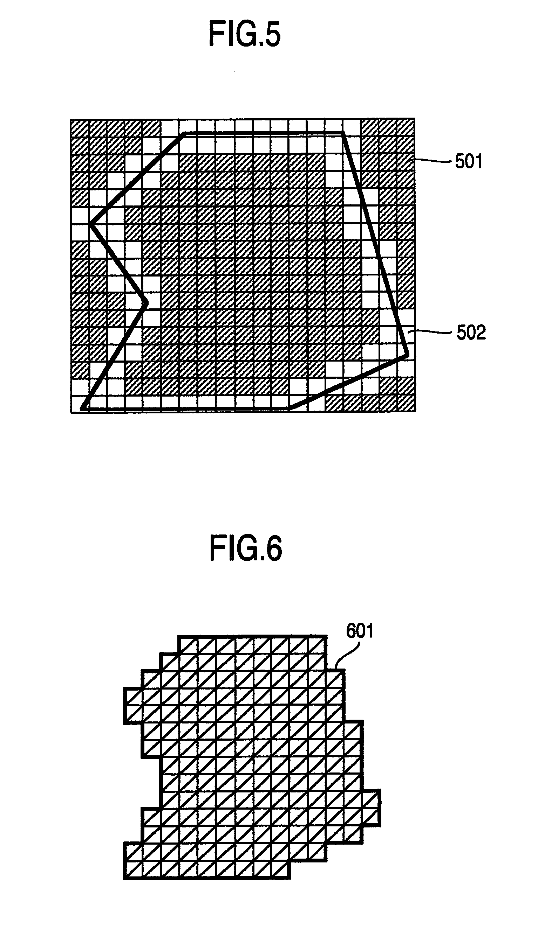

Fig. 5 shows the determined inside and outside of the shaped regular mesh.

That is, as indicated in the step S207 of Fig. 2, Fig. 5 shows the result in which the regular mesh is determined to be located inside or outside the triangular mesh on the surface of geometry model or to be crossed therewith. The outside regular mesh is shown by 501 of Fig. 5, the inside regular mesh is shown by 503 of Fig. 5, and the crossed regular mesh is shown by 502 of Fig. 5.

The regular mesh closer to the boundary 301 of the geometry model shown in Fig. 3 is determined to be crossed with the triangular mesh if it is located inside the triangular mesh. This determination is executed in consideration of the quality of the generated mesh. That is, the determination makes contribution to preventing generation of a flat mesh.

Fig. 6 shows a regular mesh generated in the geometry model.

As indicated in the step S212 of Fig. 2, the regular determined to be located inside as shown in Fig. 5 is divided into triangles (tetrahedrons in the three-dimensional shape). In Fig. 6, one quadrangle is divided into two triangles. In the three-dimensional shape, one hexahedron is divided into six tetrahedrons.

The hexahedron can be divided into five or six tetrahedrons. Herein, to divide the hexahedron into tetrahedrons, at first, the hexahedron is divided into two triangular prisms. Then, each triangular prism is divided into three tetrahedrons.

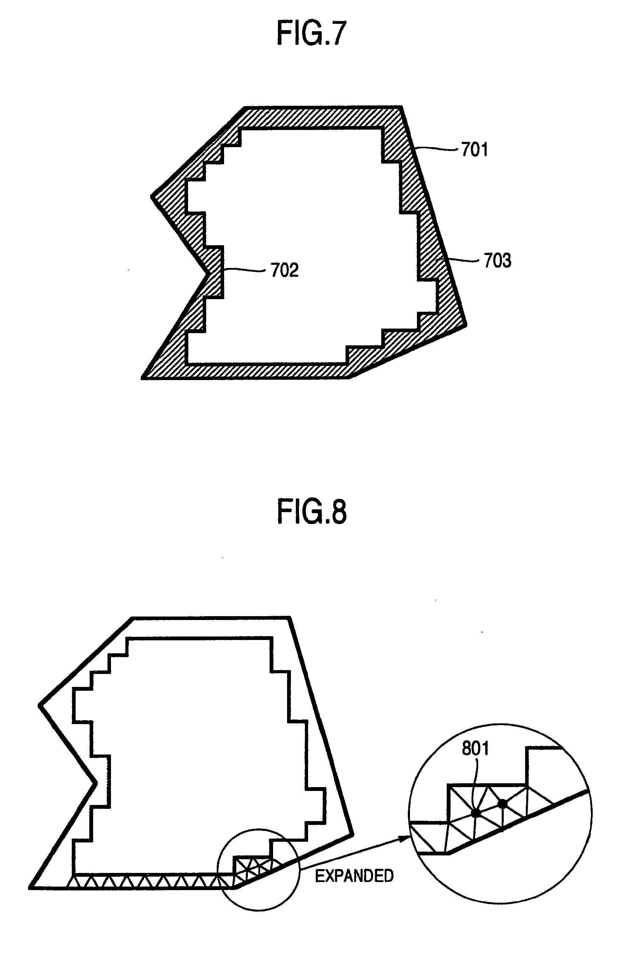

Fig. 7 shows the extracted shell meshing area.

That is, as indicated in the step S213 of Fig. 2, Fig. 7 shows the shell 703 laid between the triangular mesh 701 on the surface of geometry model and the triangles 702 on the surface of the regular mesh, the shell extracted by the shell meshing area extracting portion 106.

In the triangles 702 on the surface of the regular mesh, the surface of the regular mesh is composed of triangular planes. Hence, a similarly patterned triangular mesh is newly created on the triangular planes on the surface of the regular mesh.

Fig. 8 shows the way of dividing the shell meshing area in a meshed manner.

As shown in Fig. 8, a tetrahedral mesh is sequentially generated on the shell by the shell mesh generating portion 107. Though Fig. 8 shows the meshing way, to generate the tetrahedral mesh, the Delaunay Method or the Advancing Front Method may be used.

As indicated in the step S212 of Fig. 5 or Fig. 2, the regular mesh is kept from the surface triangles by one element or more so as to prevent the narrow portion. As to the shell meshing area, the proper interval of the gap is 0.5 to 1.5 time as long as the target element dimension.

As indicated in the step S217 of Fig. 2, in principle, the existing nodes are used for the vertexes of the tetrahedron. This composition sometimes does not meet the necessary quality of the element. The element quality of the tetrahedron is estimated in light of the mesh quality indexes such as a stretch and an aspect ratio.

The stretch means a normalized ratio of a radius of an inscribed sphere of a tetrahedron to a maximum edge length of the tetrahedron (that is the length of the longest one of the edges composing the tetrahedron). The aspect ratio means a normalized ratio of the length of the shortest edge of a tetrahedron to the length of the longest edge of the tetrahedron.

If the mesh of inferior quality is generated by the existing nodes only, as indicated in the step S218 of Fig. 2, when generating a tetrahedron, a node is added to a position at which the element of inferior quality is generated as indicated by 801.

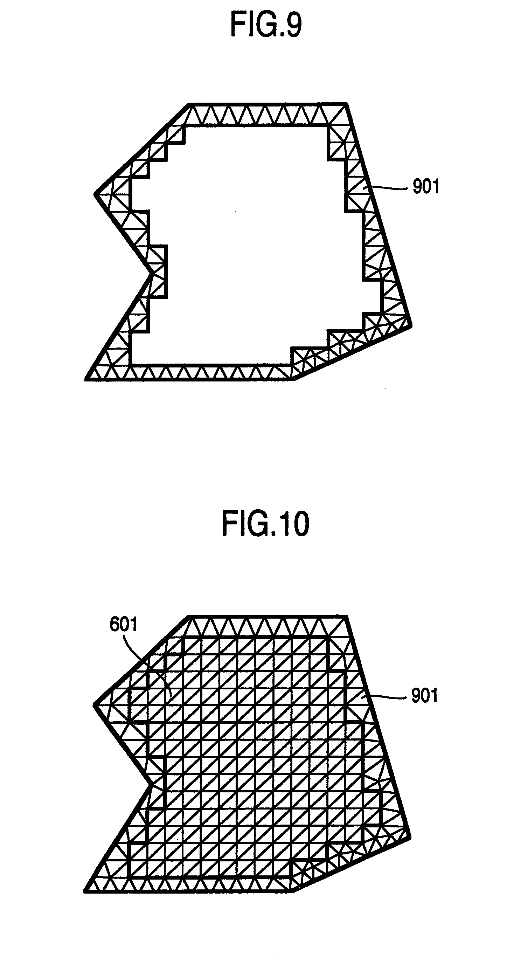

Fig. 9 shows the exemplarily mesh generated in the shell.

That is, Fig. 9 shows the state in which the generation of the shell mesh in the shell meshing area is finished. This state corresponds to the branch to No in the determining step S215 of Fig. 2.

Fig. 10 shows the exemplary mesh completed by melting the shell mesh with the regular mesh.

That is, as shown in Fig. 10, the resulting mesh is completed by fitting the shell mesh 901 shown in Fig. 9 with the regular mesh indicated by 601 of Fig. 6. This completed state corresponds to the step S221 of Fig. 2.

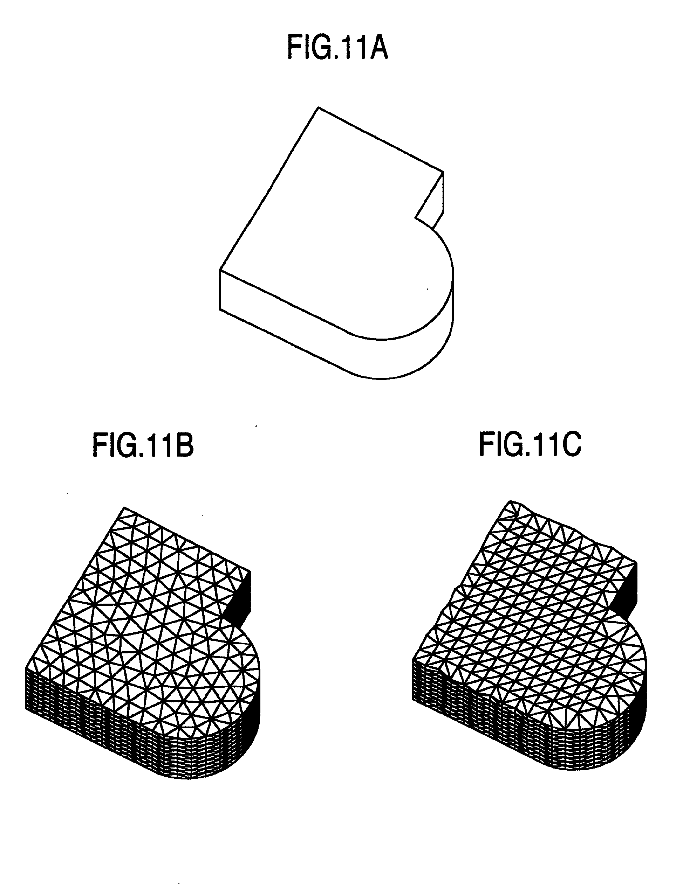

Fig. 11A, 11B or 11C shows the exemplary mesh generated in a three-dimensional shape. Concretely, Fig. 11A shows the geometry model, Fig. 11B shows the generated mesh, and Fig. 11C shows the geometry model in which the mesh is partially hidden.

That is, Fig. 11 shows the actual three-dimensional geometry model. Fig. 11A sows a geometry model created by using the three-dimensional CAD and Fig. 11B shows the generated mesh.

Further, by making a part of the shape shown in Fig. 11B, for example, a mesh on the central surface hidden, the mesh in the inner central portion of the shape is made visible. This design makes it possible to check the pattern of the regular mesh located inside the shape.

Though the regular mesh is used in the inside mesh in this embodiment, instead, it is possible to pre-store the existing mesh rather than the regular mesh in the memory located in the computer 101 and to use it as the inner mesh. To execute this method, a plurality of tetrahedral meshes of high quality are generated as primitive shapes such as a sphere or a parallelpiped in advance and pre-stored in the memory.

Then, those tetrahedral meshes are expanded or shrunk to the target element dimension so that the resulting mesh may be inserted into the inside of the triangular mesh on the surface. Instead, the sufficiently expanded mesh is generated in advance and then is stored in the memory. Then, the inner mesh portion is extracted so as to involve the triangular mesh on the surface, and the extracted mesh portion is used.

This design makes it possible to reduce the area in which a mesh is to be newly generated. This is effective in reducing the time of generating the mesh as in the case of using the regular mesh.

It goes without saying that the present invention is not limited to the aforementioned embodiments and may be properly modified in various forms without departing from the spirit of the invention.

**Claims**

1. A numerical analysis mesh generating apparatus for generating a numerical analysis mesh for a three-dimensional shape to be analyzed as a pre-process of analyzing the three-dimensional shape through the effect of a computer (101), executing the method comprising the steps of:

   locating a tetrahedral mesh with a regular structure in a first portion inside the three-dimensional geometry model to be analyzed through the effect of the computer (101); and

generating in sequence a tetrahedral mesh in a second portion rather than the first portion, laid between the surface of the tetrahedral mesh with the regular structure and the surface of the three-dimensional geometry model through the effect of the computer (101).

2. The numerical analysis mesh generating apparatus as claimed in claim 1, comprising:

means (104) for generating a triangular mesh on the surface by dividing the surface of the three-dimensional geometry model to be analyzed by a triangular element with a target element dimension indicating an average distance between nodes in generating the mesh so as to generate the triangular mesh on the surface through the effect of the computer (steps 201 to 204);

means (105) for generating a regular mesh composed of hexahedral elements by dividing a parallelepiped enclosing the three-dimensional geometry model to be analyzed by a hexahedral element with the same target element dimension as that of the triangular mesh on the surface so as to generate a regular mesh composed of hexahedral elements through the effect of the computer (step S205);

means for determining if the regular mesh composed of the hexahedral elements is located inside or outside the triangular mesh on the surface or crossed with the triangular mesh through the effect of the computer (steps S206 to S211);

means for generating an inner tetrahedral mesh with a regular structure in the first portion determined to be located inside the triangular mesh on the surface by dividing the regular mesh composed of the hexahedral elements into a tetrahedral mesh through the effect of the computer (step S212); and

means (107) for sequentially generating the tetrahedral mesh in the shell-like second portion (901) laid between the inner tetrahedral mesh and the triangular mesh on the surface through the effect of the computer (steps S213 to S221).

3. The numerical analysis mesh generating apparatus as claimed in claim 2, wherein the tetrahedral mesh pre-created and pre-stored in a storage unit (110) is located in the first portion located inside the triangular mesh on the surface.

4. The numerical analysis mesh generating apparatus as claimed in claim 2, executing the process comprising the further steps of:

setting a minimum interval between a node of the inner tetrahedral mesh generated in the first portion determined to be located inside the triangular mesh on the surface and the triangular mesh on the surface based on the target element dimension of the triangular mesh on the surface through the effect of the computer (101); and

generating the tetrahedral mesh in the shell-like second portion laid between the inner tetrahedral mesh and the triangular mesh on the surface with the minimum interval as the constraint through the effect of the computer (101).

5. The numerical analysis mesh generating apparatus as claimed in claim 2, wherein the determination of the hexahedral element to be located inside the triangular mesh on the surface means that the hexahedral element of the regular mesh is far from the triangular mesh on the surface by a half or more of the target element dimension of the triangular mesh on the surface.

6. The numerical analysis mesh generating apparatus as claimed in claim 2, wherein the determination of the hexahedral element to be crossed with the triangular mesh on the surface means that any one of the eight nodes composing the hexahedral element of the regular mesh is included inside a three-dimensional box enclosing the triangular mesh on the surface, the box being larger by the target element dimension of the triangular mesh in the three-dimensional direction.

# FIG.1

101

102

| GEOMETRY MODEL READING PORTION | ~103 |
| SURFACE OF GEOMETRY MODEL OF TRIANGULAR MESH GENERATING PORTION | ~104 |
| REGULAR MESH GENERATING PORTION | ~105 |
| SHELL MESHING AREA EXTRACTING PORTION | ~106 |
| SHELL MESH GENERATING PORTION | ~107 |
| MESH REFINING PORTION | ~108 |
| MESH OUTPUT PORTION | ~109 |

110

# FIG.2

START

READ GEOMETRY MODEL — S201

GENERATE TRIANGULAR MESH ON SURFACE OF GEOMETRY MODEL — S202

CALCULATE INCLUSIVE DIMENSION OF SURFACE TRIANGLE — S203

CALCULATE AVERAGE EDGE LENGTH OF SURFACE TRIANGLE — S204

DIVIDE BOXY ENCOMPASSING SURFACE TRIANGLE BY AVERAGE EDGE LENGTH OF TRIANGLE SO AS TO GENERATE REGULAR HEXAHEDRAL MESH — S205

S206 IS CHECK FOR INSIDE OR OUTSIDE OF SURFACE TRIANGLE FINISHED ABOUT ALL HEXAHEDRONS ? — NO

S207 WHERE ON SHAPED SURFACE TRIANGLE IS A CERTAIN HEXAHEDRON ELEMENT ?

S208 DETERMINE THAT ELEMENT BEING CHECKED IS LOCATED "OUTSIDE"

S209 IS IT CLOSER TO SURFACE ? — YES

NO

S210 DETERMINE THAT ELEMENT BEING CHECKED IS LOCATED "INSIDE"

S211 DETERMINE THAT ELEMENT BEING CHECKED IS CROSSED

YES

DIVIDE INSIDE HEXAHEDRAL MESH BY SIX TETRAHEDRONS — S212

EXTRACT SHELL MESHING AREA — S213

RETRIEVE SURFACE TRIANGLE THAT DOES NOT BELONG TO TETRAHEDRON OR INSIDE TRIANGLE THAT DOES NOT BELONG TO TWO TETRAHEDRONS — S214

S215 DOES TRIANGLE MEETING THE CONDITION EXIST ? — YES

S216 IS EXCELLENT TETRAHEDRON GENERATED BY USING THE TRIANGLE AND THE EXISTING NODES ? — NO

S217 YES GENERATE TETRAHEDRON BY EXISTING NODES

S218 GENERATE TETRAHEDRON BY EXISTING NODES WITH NEW NODES ADDED THERETO

NO

S219 DOES TETRAHEDRON OF INFERIOR QUALITY EXIST ? — YES

MODIFY TETRAHEDRAL MESH OF INFERIOR QUALITY — S220

NO

OUTPUT MESH — S221

END

# FIG.3

301

302

# FIG.4

401

301

# FIG.5

501

502

# FIG.6

601

## FIG.7

701

702

703

## FIG.8

801

EXPANDED

# FIG.9

901

# FIG.10

601

901

# FIG.11A

# FIG.11B

# FIG.11C

**EP 1 978 487 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7334541 A